# DEMANDE DE BREVET EUROPEEN

(11) **EP 4 607 049 A1**
(43) Date de publication de la demande: **27.08.2025**
(21) Numéro de dépôt: 25157522.1
(22) Date de dépôt: 12.02.2025
(51) Int. Cl.: F16C 33/76, F16C 33/78, F16C 19/10, F16C 33/74, B60G 15/06

(54) **BUTÉE TOURNANTE DE SUSPENSION POURVUE D'UN JOINT D'ÉTANCHÉITÉ ENCASTRÉ**

(30) Priorité: 25.02.2024 FR 2401825
(71) Demandeur: NTN Europe, 74000 Annecy (FR)
(72) Inventeur: BONNAUDET, Aurélien, 74000 ANNECEY (FR); POURROY-SOLARI, Vincent, 74230 Thônes (FR)
(74) Mandataire: Alatis

(57) **Abrégé**

Une butée tournante de suspension (10) pour une jambe de suspension comporte : un palier (18), un support inférieur (12), et un siège de joint (38) et un couvercle (20), le couvercle (20) comportant une jupe annulaire (46) présentant une face de fixation (95) radialement en regard et à distance du siège de joint (38) et/ou du palier (18), un joint (56) d'étanchéité monomatière élastique, présentant un corps (58) fixé à la face de fixation (95) du couvercle (20) et au moins une lèvre d'étanchéité (60) annulaire en saillie depuis le corps (58) vers le siège de joint (38). Une face de contact (94) du corps (58) avec la face de fixation (95) comporte au moins une moulure (70) radialement en creux ou en relief, réalisant un encastrement avec une moulure correspondante (71) de la face de fixation (95).

## Description

### DOMAINE TECHNIQUE DE L'INVENTION

L'invention se rapporte à une butée tournante de suspension pour interfacer une spire supérieure de ressort hélicoïdal de suspension de véhicule avec la caisse du véhicule.

### ÉTAT DE LA TECHNIQUE ANTÉRIEURE

Dans le document EP 3 626 486 A1 est décrit une butée tournante de suspension pour une jambe de suspension, comportant un support inférieur formant une portée d'appui pour une spire supérieure de ressort hélicoïdal, un palier supporté par le support inférieur et un couvercle formant avec le support inférieur un logement pour le palier. Un joint annulaire est fretté sur le couvercle et présente plusieurs lèvres d'étanchéité pointant axialement vers le haut, qui viennent en contact glissant avec le support inférieur pour créer une étanchéité de protection du logement où se trouve le palier. Le frettage du joint annulaire sur le couvercle nécessite une conception du joint en deux pièces, à savoir une armature de frettage rigide et un corps de joint élastomère formant les lèvres de joints. Par ailleurs, pour obtenir une étanchéité résistant à une aspersion de liquide de lavage sous pression, comme on en rencontre dans des stations de lavage, il est nécessaire de multiplier les lèvres d'étanchéité, avec un risque d'augmentation du couple de frottement.

Le document FR3133421 A1 présente également une autre butée tournante de suspension comprenant un joint présentant une lèvre.

Le document EP3693625 A1 présente une butée de suspension tournante équipée d'un joint d'étanchéité et de retenue monomatière, comportant un corps de joint fixé au support inférieur d'une manière non précisée, et une lèvre qui vient en contact glissant avec une paroi cylindrique du couvercle pour réaliser une fonction d'étanchéité, le couvercle étant pourvu à l'extrémité de la paroi cylindrique d'un bourrelet en recouvrement radial avec la lèvre pour assurer le maintien axial entre le couvercle et le support inférieur. Le corps du joint est en contact surfacique avec le support inférieur le long d'une interface cylindrique et d'une interface annulaire plane. Une solution pour fixer le joint au support inférieur est le surmoulage, comme décrit par exemple dans le document FR 2 989 634 A1. Une solution théorique alternative serait un frettage, mais celui-ci nécessite des tolérances de fabrication très serrées au niveau de la paroi cylindrique du support inférieur en contact avec le corps du joint, pour éviter que des défauts de cylindricité de la paroi cylindrique se répercutent par l'intermédiaire du corps de joint sur la lèvre d'étanchéité et détériorent ainsi les performances d'étanchéité ou la durée de vie de la lèvre. Cette solution imposerait en outre au niveau du joint un renfort rigide pour assurer un frettage maîtrisé du fait de la faible section du joint et de la faible hauteur disponible pour le frettage.

### EXPOSÉ DE L'INVENTION

L'invention vise à remédier aux inconvénients de l'état de la technique et à proposer une solution pour réaliser l'étanchéité, et de préférence la retenue axiale, entre un couvercle et un support inférieur de butée tournante de suspension, qui soit économique, sans sacrifier les performances d'étanchéité, y compris dans des conditions de fluctuations thermiques importantes.

Pour ce faire est proposé, selon un premier aspect de l'invention, une butée tournante de suspension pour une jambe de suspension, la butée tournante de suspension comportant :
- un palier définissant un axe de référence de la butée tournante,
- un support inférieur formant une portée d'appui tournée axialement dans une direction axiale descendante pour venir en appui contre une spire supérieure de ressort hélicoïdal, et un siège de joint,
- un couvercle délimitant avec le support inférieur un volume annulaire pour le palier, le couvercle comportant une jupe annulaire présentant une face de fixation tournée radialement vers le siège de joint et/ou le palier, radialement en regard et à distance du siège de joint et/ou du palier,
- un joint d'étanchéité monomatière élastique, présentant un corps fixé à la face de fixation du couvercle et au moins une lèvre d'étanchéité annulaire en saillie depuis le corps vers le siège de joint,
la butée tournante de suspension étant remarquable en ce qu'une face de contact du corps avec la face de fixation, tournée radialement vers la face de fixation et à l'opposé du siège de joint, comporte au moins une moulure radialement en creux ou en relief par rapport au reste de la face de contact, réalisant un encastrement avec une moulure correspondante de la face de fixation.

L'encastrement permet d'assurer simplement la fixation mécanique d'un joint d'étanchéité monomatière élastique dans le couvercle et de se dispenser d'une armature de frettage ou d'un collage. Par moulure, on entend ici, et dans l'ensemble du texte de la demande, tout relief ou creux. Par moulure correspondante, on entend toute moulure qui, par complémentarité de forme au moins partielle, permet un verrouillage de forme qui empêche la désolidarisation, tout au moins dans une gamme d'effort correspondant à une utilisation normale de la butée tournante. L'assemblage du joint dans le couvercle est rendu possible par l'élasticité du joint qui autorise une déformation élastique du joint lors de son insertion dans le couvercle, et une diminution de la déformation lorsque la moulure et la moulure correspondante s'interpénètrent.

En projection sur l'axe de référence, la moulure du corps est située, suivant un mode de réalisation, au moins partiellement, et de préférence en totalité, axialement à distance d'une zone de jonction de la lèvre d'étanchéité avec le corps, dans la direction axiale descendante. Cette distance permet de dissocier les fonctions de fixation et d'étanchéité et d'éviter que des défauts de géométrie de la moulure du corps ou de la moulure correspondante du couvercle, ou des imprécisions lors du montage, se répercutent négativement sur le positionnement de la lèvre d'étanchéité.

Suivant un mode de réalisation, la lèvre d'étanchéité dans une position de repos est en contact glissant avec le siège de joint. Dans la mesure où le siège de joint est formé sur le support inférieur, radialement à l'intérieur du couvercle, le diamètre du siège de joint, qui détermine la longueur de l'interface de contact entre la lèvre et le siège de joint, est relativement faible, de sorte que le couple de frottement est faible.

Suivant un mode de réalisation, la lèvre d'étanchéité fait saillie depuis le corps radialement vers l'axe de référence et axialement dans la direction descendante. De préférence, la lèvre d'étanchéité est tronconique ou sensiblement tronconique. Cette orientation de la lèvre est favorable pour limiter l'intrusion d'un jet liquide sous pression depuis l'extérieur de la butée tournante, puisque le jet sous pression aura pour effet de plaquer davantage la lèvre contre le siège de joint.

La moulure du joint et la moulure correspondante du couvercle peuvent comporter plusieurs creux ou aspérités répartis sur la circonférence du couvercle et du joint. Toutefois, une telle disposition impose une indexation angulaire du joint par rapport au couvercle lors du montage. On privilégie donc des modes de réalisation dans lesquels la moulure du corps est annulaire. Suivant un mode de réalisation, la moulure du corps est un bourrelet.

Pour les mêmes raisons, on privilégie des modes de réalisation dans lesquels la moulure correspondante de la jupe annulaire du couvercle est annulaire. Suivant un mode de réalisation, la moulure correspondante de la jupe annulaire du couvercle est une gorge annulaire.

Le montage du couvercle équipé de son joint d'étanchéité sur le support inférieur nécessite quelques précautions pour ne pas retourner ou endommager la lèvre du joint d'étanchéité. Pour favoriser le guidage de la lèvre de joint lors du montage, on peut prévoir le support inférieur comporte un chanfrein tourné radialement à l'opposé de l'axe de référence et axialement à l'opposé de la direction descendante, le siège de joint étant positionné dans la continuité du chanfrein, dans la direction descendante.

En pratique, le siège de joint présente une enveloppe géométrique qui est une surface de révolution autour de l'axe de référence. On peut envisager notamment un siège de joint tronconique, orienté dans la direction ascendante ou descendante. Toutefois, une telle disposition impose une parfaite maîtrise du positionnement axial du couvercle portant le joint d'étanchéité, si l'on veut maîtriser également la pression de contact à l'interface entre la lèvre de joint et le siège de joint. On préfère donc des modes de réalisation dans lesquels, le siège de joint est cylindrique.

Suivant un mode de réalisation, la jupe annulaire comporte une extrémité annulaire libre telle que : l'extrémité annulaire libre forme une collerette de rigidification. Cette rigidification est particulièrement utile pour parfaire la maîtrise de la géométrie du couvercle et éviter ou limiter des déformations dynamiques nuisibles qui diminueraient la qualité de l'étanchéité, notamment lorsque la butée tournante est soumise à des vibrations.

Suivant un mode de réalisation, la jupe annulaire comporte une extrémité annulaire libre telle que : l'extrémité annulaire libre forme une butée axiale pour un talon formé par le corps du joint d'étanchéité. Cette butée axiale facilite le montage du joint d'étanchéité sur le couvercle en déterminant le positionnement axial relatif des deux pièces.

Les caractéristiques mécaniques du matériau constitutif du joint d'étanchéité sont judicieusement choisies pour permettre à la fois l'encastrement dans le couvercle et le glissement de la lèvre de joint sur le siège de joint. De préférence, le joint d'étanchéité monomatière est réalisé en un matériau ayant un module de traction ou de flexion supérieur 1000 Mpa, et une résistance à la rupture supérieure 40 Mpa.

Des matériaux particulièrement adaptés sont le joint d'étanchéité monomatière est réalisé en polycétone ou en polyoxyméthylène ou en acrylonitrile butadiène ou en polyuréthane thermoplastique.

Dans certaines applications, la butée tournante de suspension est assemblée avant son montage sur le véhicule. Il est alors nécessaire d'assurer la cohésion de la butée tournante avant son montage sur le véhicule. Suivant un mode de réalisation, le support inférieur comporte au moins un épaulement de retenue tourné axialement dans la direction descendante, le joint d'étanchéité comportant un bossage en partie en recouvrement radial avec l'épaulement de retenue, à distance de l'épaulement de retenue dans la direction axiale descendante.

Suivant un autre mode de réalisation, le support inférieur comporte au moins un épaulement de retenue (40') tourné axialement dans la direction descendante, le couvercle comportant au moins un bossage en partie en recouvrement radial avec l'épaulement de retenue, à distance de l'épaulement de retenue dans la direction axiale descendante. Cette solution offre l'avantage de simplifier le profil du support inférieur, qui peut être réalisé sans contre-dépouille. En particulier, le support inférieur peut être fabriqué par moulage axial, c'est-à-dire entre deux pièces de moule se séparant par translation parallèlement à l'axe de référence de la butée tournante, sans nécessiter de tiroirs latéraux pour des formes en contre-dépouille.

Suivant un mode de réalisation, la lèvre d'étanchéité présente une section axiale en V, avec un sommet de V pointant dans la direction axiale descendante. Cette forme assure une bonne flexibilité de la lèvre d'étanchéité et une bonne maîtrise de la pression de contact avec le siège de joint, donc du couple de trainée résistant à la rotation relative du support inférieur par rapport au couvercle autour de l'axe de référence de la butée tournante.

Suivant un mode de réalisation, le palier comporte un chemin de guidage supérieur annulaire fixe par rapport au couvercle, un chemin de guidage inférieur annulaire fixe par rapport au support inférieur, disposé en regard du chemin de guidage supérieur, et des moyens interposés entre le chemin de guidage supérieur et le chemin de guidage inférieur pour permettre une rotation du chemin de guidage inférieur par rapport au chemin de guidage supérieur autour de l'axe de référence de la butée tournante. Ces moyens peuvent par exemple inclure un film de lubrifiant ou un patin annulaire en contact glissant avec le chemin de guidage supérieur et le chemin de guidage inférieur dans le cas d'un palier lisse, ou des corps roulants, le cas échéant logés dans une cage, et roulant sur le chemin de guidage supérieur et le chemin de guidage inférieur, dans le cas d'un palier à roulement. Le chemin de guidage supérieur peut être formé d'une pièce avec le couvercle ou sur une rondelle de guidage en appui sur le couvercle. Le chemin de guidage inférieur peut être formé d'une pièce avec le support inférieur ou sur une rondelle de guidage en appui sur le support inférieur.

### BRÈVE DESCRIPTION DES FIGURES

D'autres caractéristiques et avantages de l'invention ressortiront à la lecture de la description qui suit, en référence aux figures annexées.
[Fig. 1] La figure 1 illustre en demi-coupe axiale une butée tournante de suspension suivant un premier exemple de réalisation de l'invention.
[Fig. 2] La figure 2 illustre en demi-coupe axiale une butée tournante de suspension suivant un second exemple de réalisation de l'invention.
[Fig. 3] La figure 3 illustre en demi-coupe axiale une butée tournante de suspension suivant un troisième exemple de réalisation de l'invention.
[Fig. 4] La figure 4 illustre en perspective un détail d'un joint d'étanchéité intérieur de la butée de la figure 1.

Pour plus de clarté, les éléments identiques ou similaires sont repérés par des signes de référence identiques sur l'ensemble des figures.

### DESCRIPTION DÉTAILLÉE DE MODES DE REALISATION

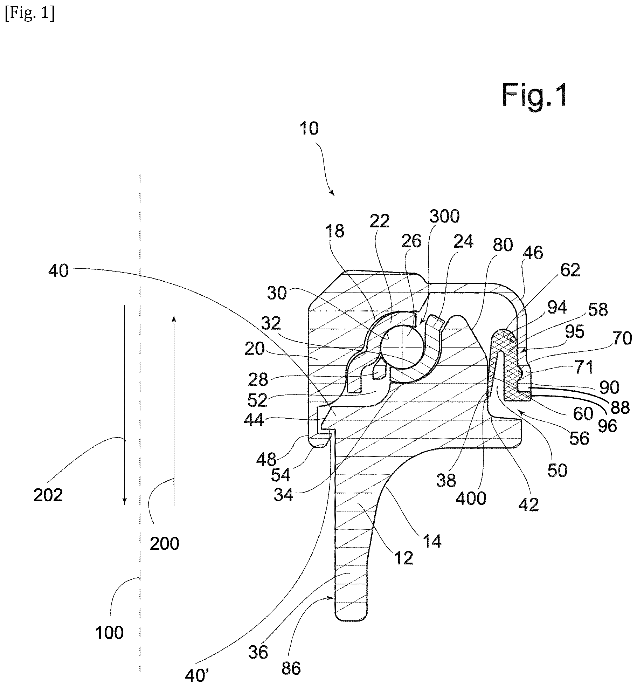

Sur la figure **1** est illustrée une butée tournante **10** pour une jambe de suspension de véhicule, comportant un support inférieur **12** formant une portée d'appui **14** pour une spire supérieure d'un ressort hélicoïdal, un palier **18** supporté par le support inférieur **12** et un couvercle **20** formant avec le support inférieur **12** un volume de logement **300** pour le palier **18.**

Dans cet exemple, et sans que cela ait une valeur nécessairement limitative, le palier **18** a été illustré comme un palier à roulement comportant une rondelle supérieure **22** en appui sous le couvercle **20,** une rondelle inférieure **24** en appui sur le support inférieur **12** et des corps roulants **26** retenus par une cage de roulement **28** de manière à rouler sur un chemin de guidage supérieur **30** formé sur la rondelle supérieure **22** et un chemin de guidage inférieur **32** formé sur la rondelle inférieure **24.** Le palier **18** permet un mouvement relatif de rotation entre le chemin de guidage supérieur **30** et le chemin de guidage inférieur **32,** donc entre le couvercle **20** et le support inférieur **12,** autour d'un axe de référence **100** du palier **18,** qui constitue un axe de référence de la butée tournante **10.** Le palier **18** définit également une direction ascendante **200** parallèle à l'axe de référence **100** et telle que la portée d'appui **14** du support inférieur **12** est situé sous le palier **18,** lui-même situé sous le couvercle **20.** Après montage sur le véhicule, l'axe de référence **100** de la butée tournante **10** peut être vertical ou incliné.

La rondelle inférieure **24** est en appui sur une face d'appui **34** du support inférieur **12** tournée axialement en direction ascendante et qui, dans ce mode de réalisation, se trouve positionnée radialement en recouvrement avec la portée d'appui **14** formée sur le support inférieur **12** pour une spire supérieure d'un ressort hélicoïdal. La portée d'appui **14** du support inférieur **12** est tournée axialement dans une direction descendante **202** opposée de la direction axiale ascendante **200,** et se prolonge par une jupe de centrage **36** faisant saillie axialement vers le bas. La face d'appui **34** peut être pleine ou discontinue, afin d'alléger le poids tout en maintenant une structure rigide.

Le support inférieur **12** comporte en outre un siège de joint **38** annulaire tourné radialement vers l'extérieur et situé radialement à l'extérieur de la face d'appui **34.** Le siège de joint **38** et est par exemple cylindrique ou tronconique avec un angle de dépouille de préférence inférieur à 5° convergeant en direction ascendante. Le siège de joint **38** est prolongé par une face annulaire de transition extérieure **42** qui s'étend depuis le siège de joint **38** radialement vers l'extérieur et est tournée axialement dans la direction ascendante **200.**

Le support inférieur **12** comporte en outre une collerette intérieure **40** en saillie par rapport à une face de confinement **86,** et prolongée par une face annulaire de transition intérieure **44** tronconique qui s'étend depuis la collerette intérieure **40** radialement vers l'intérieur et est tournée axialement dans la direction ascendante **200.** La collerette intérieure **40** forme un épaulement intérieur **40'** annulaire plan.

La face de confinement **86** constitue la face intérieure de la jupe de centrage **36.** La face de confinement **86** est globalement cylindrique, ou être légèrement tronconique avec un angle de dépouille convergeant en direction ascendante. La face de confinement **86** délimite un volume de logement ou de confinement d'une butée de choc (non représentée sur les figures).

Le support inférieur **12** forme un chanfrein **80** annulaire tourné radialement à l'opposé de l'axe de référence **100** et axialement dans la direction ascendante **200.**

De façon remarquable, le support inférieur **12,** considéré en direction axiale, ne présente aucune contre-dépouille, ou aucune contre-dépouille qui empêcherait un démoulage de la pièce fabriqué par moulage dans un moule dont les coquilles sont mobiles en translation parallèlement à l'axe de référence. Le support inférieur est donc réalisé de préférence dans un tel moule. Il peut s'agir d'une pièce en matière plastique, avec ou sans insert de renfort, ou d'une pièce en métal léger, notamment en aluminium.

Le couvercle **20** comporte une jupe annulaire **46** extérieure en regard et à distance du siège de joint **38** et une jupe intérieure **48** annulaire en regard et à distance de la collerette intérieure **40,** de sorte que sont délimités un passage annulaire extérieur **50** d'accès au volume **300** de logement du palier **18** entre le siège de joint **38** et la jupe annulaire **46,** et un passage annulaire intérieur **52** d'accès au volume **300** de logement du palier **18** entre la collerette intérieure **40** et la jupe intérieure **48.** L'une des deux jupes **46, 48** du couvercle **20,** ici la jupe intérieure **48,** peut être pourvue d'un ou plusieurs bossages de retenue en saillie radiale depuis la jupe vers le support inférieur **12,** réalisées ici sous forme d'une couronne ou de crochets individuels **54** à une extrémité annulaire de la jupe intérieure **48.** La jupe annulaire **46** extérieure peut présenter une collerette **90** de rigidification à une extrémité annulaire libre **88.** Cette collerette **90** de rigidification permet limiter les éventuelles déformations de la jupe annulaire **46** sous les contraintes mécaniques.

Dans le passage annulaire extérieur **50** est engagé un joint **56** d'étanchéité monomatière élastique, destiné à protéger le palier **18** contre les pollutions extérieures.

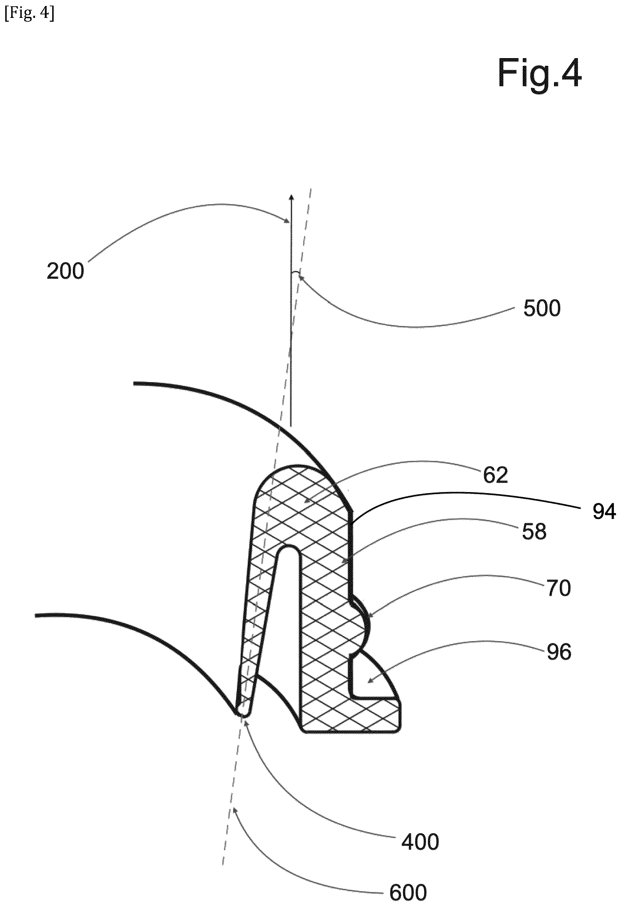

Dans cet exemple de réalisation, le joint **56** d'étanchéité monomatière, illustré en détail sur la figure 4, est réalisé d'une pièce en matériau élastomère sans insert, et comporte un corps **58** annulaire et une lèvre d'étanchéité **60** glissante. La lèvre d'étanchéité **60** est saillante depuis une zone de jonction **62** avec le corps **58** annulaire et en contact glissant avec le siège de joint **38** du support inférieur **12.** Le corps **58** annulaire vient en appui élastique contre la jupe annulaire **46.** Le diamètre du siège de joint **38** détermine le périmètre de l'interface du contact entre la lèvre d'étanchéité **60** et le siège de joint **38,** et est de préférence relativement faible afin de garantir un couple de frottement faible.

Le corps **58** du joint **56** d'étanchéité monomatière est annulaire et s'étend depuis la zone de jonction **62** dans la direction descendante **202,** et constitue une étanchéité statique avec la jupe annulaire **46.** Le corps **58** comprend une face de contact **94** avec une moulure **70** qui, dans ce mode de réalisation peut être un bourrelet annulaire ou un ensemble d'un ou plusieurs bossages en saillie radiale par rapport au reste de la face de contact **94** vers la jupe annulaire **46** du couvercle **20.** De façon optionnelle, le corps **58** comprend un talon **96.** Le talon **96** forme un épaulement, situé verticalement en dessous de la moulure **70,** à l'extrémité inférieure du corps **58,** axialement en saillie par rapport au corps **58,** de sorte que le corps **58,** par l'intermédiaire de l'épaulement du talon **96,** entre en butée axiale contre l'extrémité annulaire libre de la jupe annulaire **46.** Ceci permet d'assurer un positionnement axial précis lors du montage.

La moulure **70** peut être du type ponctuel ou annulaire, et définit un relief en saillie radiale, ou un creux, par rapport au reste de la face de contact **94** du corps **58** du joint **56** d'étanchéité, ladite surface de de contact **94** étant globalement cylindrique et configurée pour reposer, le cas échéant à la manière d'un frettage, contre une face de fixation correspondante **95** de la jupe annulaire **46.** Lorsque la moulure **70** est du type ponctuel, le corps **58** comprend alors plusieurs moulures **70,** de préférences réparties à équidistance les unes des autres, et de préférence de forme arrondie, en goutte de suif ou calotte sphérique par exemple. Lorsque la moulure **70** est du type annulaire, la moulure **70** est de préférence arrondie, un bourrelet annulaire par exemple.

Avant que le couvercle **20** soit posé sur le support inférieur **12,** le joint **56** d'étanchéité monomatière est inséré dans le couvercle **20** au contact d'une face de fixation **95** de la jupe annulaire **46.** Le joint d'étanchéité **56** monomatière, par l'intermédiaire de la moulure **70,** pénètre élastiquement dans une moulure correspondante **71** présente sur la face de fixation **95** de la jupe annulaire **46.** La moulure correspondante **71** est creuse et forme une gorge annulaire si la moulure **70** du joint **56** est en relief par rapport au corps **58** du joint **56,** et inversement.

La moulure correspondante **71** est ponctuelle ou annulaire, dépendamment de la moulure **70** du joint **56.** Lorsque la moulure **70** du joint **56** est annulaire, la moulure correspondante **71** est annulaire, et lorsque la moulure **70** du joint **56** est ponctuelle, la moulure correspondante **71** peut-être ponctuelle ou, de préférence, annulaire.

Dans un mode de réalisation préféré, la moulure correspondante **71** et la moulure **70** sont complémentaires dans au moins une section axiale, au sens où leurs formes sont complémentaires l'une de l'autre.

Selon le mode de réalisation illustré sur la figure 1, lorsque le joint d'étanchéité **56** monomatière est inséré dans le couvercle **20,** le caractère élastique du joint d'étanchéité **56** opère afin de permettre une déformation élastique de la moulure **70.** La moulure **70** se déforme lors de son insertion au sein du couvercle **20** puis, lorsqu'elle atteint la moulure correspondante **71,** se relâche et retrouve sa forme initiale, ou une forme intermédiaire entre son état au repos et son état transitoire lors de l'assemblage. La moulure **70** se retrouve alors bloquée dans la moulure correspondante **71,** ce que nous définissons dans la présente demande comme étant un encastrement.

Une fois le joint d'étanchéité **56** solidarisé au couvercle **20,** et après montage du palier **18** sur le support inférieur **12,** le couvercle **20** peut être assemblé sur le support inférieur **12** par un mouvement de rapprochement en translation parallèlement à l'axe de référence **100.** Le joint d'étanchéité **56** pénètre alors dans le passage annulaire extérieur **50.** La lèvre d'étanchéité **60** entre d'abord en contact glissant avec le premier chanfrein **80** du support inférieur **12,** puis est progressivement guidé par le premier chanfrein **80,** à mesure que le support inférieur **12** pénètre le couvercle **20,** jusqu'au siège de joint **38.** Par ailleurs, la couronne **54** du couvercle **20** se déforme élastiquement au passage de la face annulaire de transition intérieure **44** tronconique, puis se détend élastiquement pour venir se positionner sous la collerette intérieure **40** du support inférieur **12,** au niveau de l'épaulement intérieur **40'** annulaire, pour réaliser, après montage, un accrochage entre le couvercle **20** et le support inférieur **12.** Cette accrochage permet d'assurer la cohésion de la butée de suspension avant son montage sur le véhicule.

La zone de jonction **62** entre la lèvre d'étanchéité **60** et le corps **58** du joint peut présenter une surépaisseur par rapport à celle du corps **58** du joint. Ainsi, les contraintes induites dans le matériau du joint d'étanchéité monomatière **56** par la déformation de la lèvre d'étanchéité **60** suite à l'encastrement de la moulure **70** du corps **58** du joint dans la moulure correspondante **71** de la jupe annulaire **46** du couvercle **20** se répartissent dans le corps **58** du joint et dans la zone de jonction **62,** sans générer des déformations importantes au niveau de la lèvre d'étanchéité **60,** ce qui pourrait diminuer la qualité de l'étanchéité. La zone de jonction **62** entre la lèvre d'étanchéité **60** et le corps **58** du joint est de préférence positionnée, par référence à la direction ascendante **200,** à un niveau verticalement au-dessus du corps **58** et de la lèvre d'étanchéité **60.**

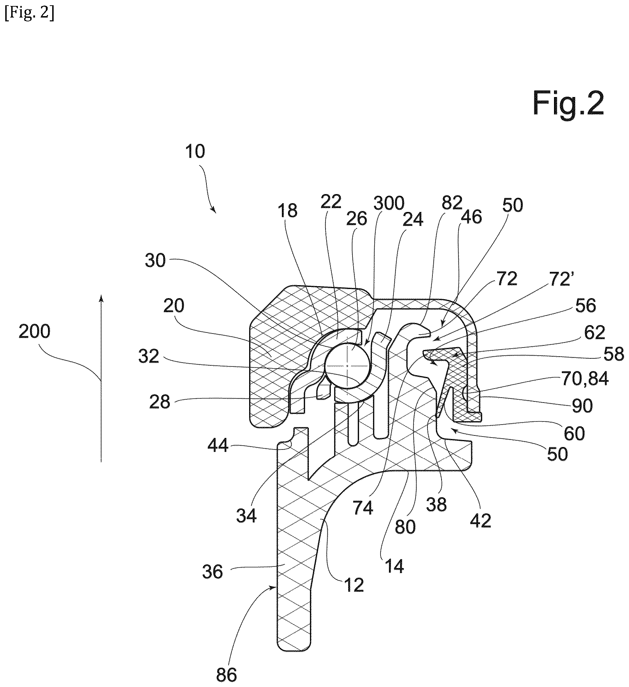

Sur la figure 2 est illustré un mode de réalisation où la moulure **70** est creuse de manière annulaire et la moulure correspondante est en relief de manière ponctuelle. Par ailleurs, le mode de réalisation de la figure 2 diffère du précédent par l'absence de la couronne **54** sur la jupe intérieure **48.** Pour réaliser la fonction d'accrochage entre le couvercle **20** et le support inférieur **12,** le support inférieur **12** présente un épaulement de retenue **72** qui, dans une vue en coupe, présente une structure en tête de cheval, dessinant une gorge **72'** au-dessus du siège de joint **38.** L'épaulement de retenue **72** forme un second chanfrein **82** qui, comme le premier chanfrein **80,** est tourné radialement à l'opposé de l'axe de référence **100** et axialement dans la direction ascendante **200.** Le joint d'étanchéité monomatière **56** forme un bossage **74** en recouvrement radial avec l'épaulement de retenue **72** du support inférieur **12.** Lors de l'assemblage du couvercle **20** et du joint d'étanchéité **56** avec le support inférieur **12,** la lèvre d'étanchéité **60** et le bossage **74** peuvent glisser sur le second chanfrein **82,** puis, pour la lèvre d'étanchéité, sur le premier chanfrein **80,** afin d'atteindre leur position assemblée. Une fois assemblée, et avant son montage sur le véhicule, la butée tournante **10** garde sa cohérence grâce au recouvrement radial entre le bossage **74,** logé dans la gorge **72',** et l'épaulement de retenue **72,** qui limite dans la direction axiale descendante la liberté de mouvement du support inférieur **12** par rapport au couvercle **20.** La structure en tête de cheval de l'épaulement de retenue **72** permet outre, en combinaison avec le bossage **74** du joint d'étanchéité monomatière **56,** de créer un trajet en chicane dans le passage annulaire extérieur **50.** Après montage sur le véhicule, la fonction de butée décrite ci-dessus n'est plus utile, mais la chicane réalisée entre le bossage **74** et la gorge **72'** permet de mieux retenir le lubrifiant, de la graisse par exemple, présent pour lubrifier les corps roulants **26** et diminuer le risque d'entrée de polluants depuis un environnement extérieur.

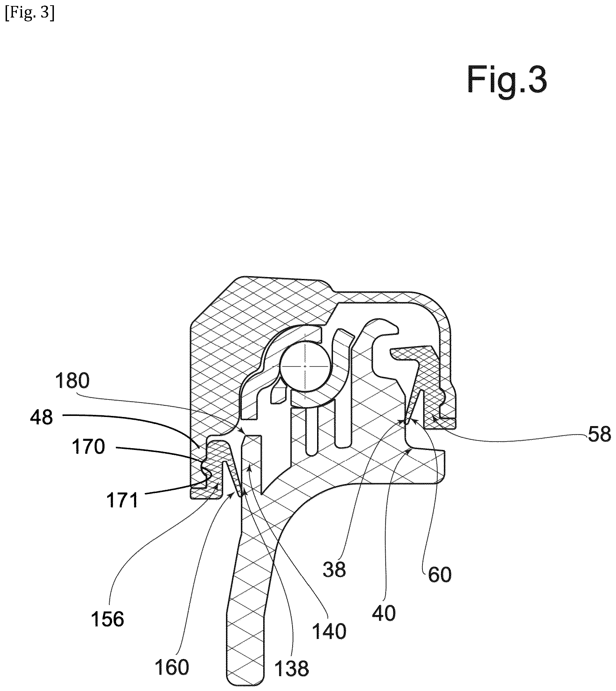

Suivant un autre mode de réalisation, illustré sur la figure 3, la collerette intérieure **40** est remplacée par une portée intérieure **140,** comprenant un chanfrein intérieur **180.** La une portée intérieure **140** présente un siège de joint intérieur **138,** sur lequel repose la lèvre intérieure **160** d'un joint intérieur **156** fixé à la jupe intérieure **48** d'une manière similaire au joint d'étanchéité de la figure 1. Plus spécifiquement, le joint d'étanchéité **156** monomatière forme une moulure **170** qui pénètre élastiquement dans une moulure correspondante **171** formée sur la jupe intérieure **48.** La moulure correspondante **171** est creuse et forme une gorge annulaire si la moulure **170** du joint **156** est en relief, et inversement.

Dans ce mode de réalisation, le couvercle **20** comprend le joint d'étanchéité **58** et le joint d'étanchéité intérieur **158.** Lorsque le joint d'étanchéité **58** est tel que présenté dans le deuxième mode de réalisation et réalise la fonction d'accrochage entre le couvercle **20** et le support inférieur **12,** le joint d'étanchéité intérieur **158** est semblable au joint d'étanchéité **58** du premier mode de réalisation. Inversement, lorsque le joint d'étanchéité **58** est tel que présenté dans le premier mode de réalisation, le joint d'étanchéité intérieur **158** est semblable au joint d'étanchéité **58** du deuxième mode de réalisation, pour réaliser l'accrochage entre le couvercle **20** et le support inférieur **12.**

Comme illustré en détail sur la figure 4, la lèvre d'étanchéité **60** présente, en coupe axiale et avant assemblage du couvercle **20** sur le support inférieur **12,** une forme de V pointant dans la direction descendante **202.** Une extrémité libre de la lèvre d'étanchéité **60** en forme de V présente un sommet **400** d'angle vif supérieur à 10°, de préférence supérieur à 15° et inférieur à 80°, de préférence inférieur à 40°, le sommet ayant, en coupe axiale, une bissectrice **600** faisant un angle **500** de préférence supérieur à 10°, de préférence supérieur à 20° avec la direction axiale ascendante **200.** La direction descendante de la lèvre d'étanchéité **60** est particulièrement performante pour s'opposer à la pénétration de polluants depuis l'extérieur vers le volume intérieur **300.** Le joint d'étanchéité **56** ainsi obtenu présente d'excellentes caractéristiques en termes de tenue mécanique de la jointure.

Le joint d'étanchéité **56** monomatière est de préférence constitué de polycétone. Le joint d'étanchéité **56** monomatière peut aussi être composé, de préférence constitué de polyoxyméthylène, d'acrylonitrile butadiène ou de polyuréthane thermoplastique. Quel que soit le matériau utilisé parmi ceux cités ci-dessus, le matériau confère au joint **56** un module de traction ou de flexion supérieur 1000 Mpa, et une résistance à la rupture supérieure 40 Mpa.

Les exemples représentés sur les figures et discutés ci-dessus ne sont donnés qu'à titre illustratif. D'autres modes de réalisation peuvent être envisagés, notamment en combinant les caractéristiques des différents exemples de réalisation illustrés.

Ce qui est décrit pour un joint d'étanchéité et de retenue peut être adapté à un joint n'ayant que la fonction d'étanchéité. Le joint d'étanchéité **56** peut être en contact glissant permanent avec le siège de joint **38** associé, ou en contact glissant intermittent, en fonction de l'amplitude et de la direction des efforts appliqués à la butée tournante de suspension.

## Revendications

1. Butée tournante de suspension (10) pour une jambe de suspension, la butée tournante de suspension (10) comportant :
- un palier (18) définissant un axe de référence (100) de la butée tournante (10),
- un support inférieur (12) formant une portée d'appui (14) tournée axialement dans une direction axiale descendante (202) pour venir en appui contre une spire supérieure de ressort hélicoïdal, et un siège de joint (38),
- un couvercle (20) délimitant avec le support inférieur (12) un volume annulaire (300) pour le palier (18), le couvercle (20) comportant une jupe annulaire (46) présentant une face de fixation (95) tournée radialement vers le siège de joint (38) et/ou le palier (18), radialement en regard et à distance du siège de joint (38) et/ou du palier (18),
- un joint (56) d'étanchéité monomatière élastique, présentant un corps (58) fixé à la face de fixation (95) du couvercle (20) et au moins une lèvre d'étanchéité (60) annulaire en saillie depuis le corps (58) vers le siège de joint (38),
**caractérisée en ce qu'**une face de contact (94) du corps (58) avec la face de fixation (95), tournée radialement vers la face de fixation (95) et à l'opposé du siège de joint, comporte au moins une moulure (70) radialement en creux ou en relief par rapport au reste de la face de contact (94), réalisant un encastrement avec une moulure correspondante (71) de la face de fixation (95).

2. Butée tournante (10) de suspension selon la revendication 1, **caractérisée en ce qu'**en projection sur l'axe de référence, la moulure (70) du corps est située au moins partiellement, et de préférence en totalité, axialement à distance d'une zone de jonction (62) de la lèvre d'étanchéité (60) avec le corps (58), dans la direction axiale descendante.

3. Butée tournante (10) de suspension selon l'une quelconque des revendications précédentes, **caractérisée en ce que** dans une position de repos, la lèvre d'étanchéité (60) est en contact glissant avec le siège de joint (38).

4. Butée tournante (10) de suspension selon l'une quelconque des revendications précédentes, **caractérisée en ce que** la lèvre d'étanchéité (60) fait saillie depuis le corps (58) radialement vers l'axe de référence et axialement dans la direction descendante.

5. Butée tournante (10) de suspension selon la revendication 4, **caractérisée en ce que** la lèvre d'étanchéité (60) est tronconique.

6. Butée tournante (10) de suspension selon l'une quelconque des revendications précédentes, **caractérisée en ce que** la moulure (70) du corps (58) est annulaire.

7. Butée tournante (10) de suspension selon la revendication 6, **caractérisée en ce que** la moulure (70) du corps (58) est un bourrelet.

8. Butée tournante (10) de suspension selon l'une quelconque des revendications précédentes, **caractérisée en ce que** la moulure correspondante (71) de la jupe annulaire (46) du couvercle (20) est annulaire.

9. Butée tournante (10) de suspension selon la revendication 8, **caractérisée en ce que** la moulure correspondante (71) de la jupe annulaire (46) du couvercle est une gorge annulaire.

10. Butée tournante (10) de suspension selon l'une quelconque des revendications précédentes, **caractérisée en ce que** le support inférieur (12) comporte un chanfrein (80, 82) tourné radialement à l'opposé de l'axe de référence et axialement à l'opposé de la direction descendante, le siège de joint (38) étant positionné dans la continuité du chanfrein, dans la direction descendante.

11. Butée tournante (10) de suspension selon l'une quelconque des revendications précédentes, **caractérisée en ce que** le siège de joint (38) est cylindrique.

12. Butée tournante (10) de suspension selon l'une quelconque des revendications précédentes, **caractérisée en ce que** la jupe annulaire (46) comporte une extrémité annulaire libre telle que :
- l'extrémité annulaire libre forme une collerette (90) de rigidification ; et/ou
- l'extrémité annulaire libre forme une butée axiale pour un talon formé par le corps du joint d'étanchéité.

13. Butée tournante (10) de suspension selon l'une quelconque des revendications précédentes, **caractérisée en ce que** le joint d'étanchéité monomatière est réalisé en un matériau ayant un module de traction ou de flexion supérieur 1000 Mpa, et une résistance à la rupture supérieure 40 Mpa.

14. Butée tournante (10) de suspension selon l'une quelconque des revendications précédentes, **caractérisée en ce que** le joint d'étanchéité monomatière est réalisé en polycétone ou en polyoxyméthylène ou en acrylonitrile butadiène ou en polyuréthane thermoplastique.

15. Butée tournante (10) de suspension selon l'une quelconque des revendications précédentes, **caractérisée en ce que** le support inférieur (12) comporte au moins un épaulement de retenue (72) tourné axialement dans la direction descendante, le joint d'étanchéité comportant un bossage (74) en partie en recouvrement radial avec l'épaulement de retenue (72), à distance de l'épaulement de retenue (72) dans la direction axiale descendante.

16. Butée tournante (10) de suspension selon l'une quelconque des revendications précédentes, **caractérisée en ce que** le support inférieur (12) comporte au moins un épaulement de retenue (40') tourné axialement dans la direction descendante, le couvercle comportant au moins un bossage (54) en partie en recouvrement radial avec l'épaulement de retenue (40'), à distance de l'épaulement de retenue (40') dans la direction axiale descendante.

17. Butée tournante (10) de suspension selon l'une quelconque des revendications précédentes, **caractérisée en ce que** la lèvre d'étanchéité (60) présente une section axiale en V, avec un sommet de V pointant dans la direction axiale descendante.
